(19) Europäisches Patentamt
European Patent Office
Office européen des brevets

(11) Veröffentlichungsnummer: **0 262 633**
**A2**

(12) # EUROPÄISCHE PATENTANMELDUNG

(21) Anmeldenummer: 87114112.3

(22) Anmeldetag: 26.09.87

(51) Int. Cl.4: C07C 103/37 , G01N 27/30

(30) Priorität: 01.10.86 CH 3927/86

(43) Veröffentlichungstag der Anmeldung: 06.04.88 Patentblatt 88/14

(84) Benannte Vertragsstaaten: AT BE CH DE ES FR GB IT LI LU NL SE

(71) Anmelder: Firma Willi Möller
Gubelstrasse 37
CH-8050 Zürich(CH)

(72) Erfinder: Simon, Wilhelm, Prof. Dr. Dipl.-Ing. Chem.
Hadlaubstrasse 63
CH-8006 Zürich(CH)

(74) Vertreter: Blum, Rudolf Emil Ernst et al
c/o E. Blum & Co Patentanwälte Vorderberg 11
CH-8044 Zürich(CH)

(54) **Dicarbonsäurediamide, Verfahren zu deren Herstellung, deren Natriumkomplexe und ionenselektive Teile zur Bestimmung der Konzentration von Natriumionen.**

(57) Neue Dicarbonsäurediamide der Formel

I

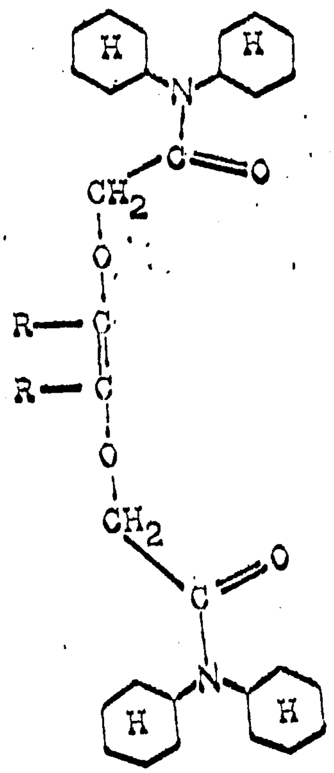

I

EP 0 262 633 A2

Xerox Copy Centre

BAD ORIGINAL

worin die Reste

R Wasserstoff, Alkyl, Alkenyl oder Alkinyl mit bis zu 20 Kohlenstoffatomen sind oder

die beiden Reste R gemeinsam mit dem Kohlenstoffatom, an welches sie gebunden sind, einen cycloaliphatischen oder aromatischen Rest darstellen, vorzugsweise einen gegebenenfalls substituierten Phenylrest, besitzen eine hohe Selektivität für Natriumionen gegenüber anderen Alkalimetall-und Erdalkalimetallionen. Mit ihrer Hilfe können hochempfindliche ionenselektive Teile zur Bestimmung der Natriumionen in flüssigen Medien hergestellt werden, beispiels weise entsprechende natriumselektive Membranen oder Teststreifen zur Bestimmung der Natriumkonzentration.

Die entsprechenden natriumselektiven Membranen haben eine lange Lebensdauer, selbst dann, wenn sie häufig mit eiweisshaltigen Lösungen in Berührung kommen, z.B. Blutserum oder Gesamtblut.

# Dicarbonsäurediamide, Verfahren zu deren Herstellung, deren Natriumkomplexe und ionenselektive Teile zur Bestimmung der Konzentration von Natriumionen.

## HINTERGRUND DER ERFINDUNG

Es sind eine grosse Anzahl an Dicarbonsäurediamiden in der Literatur beschrieben, die mit verschiedenen Kationen Komplexe bilden und die als ionenselektive Komponente von entsprechenden ionenselektiven Membranen zur Bestimmung der entsprechenden Kationen eingesetzt werden können. Auch eine Anzahl von Dicarbonsäurediamiden sind bereits bekannt, die eine gute Selektivität für Natriumionen gegenüber anderen Alkalimetallionen aufweisen. Ziel der vorliegenden Erfindung war es, eine neue Klasse an Dicarbonsäurediamiden bereit zu stellen, die eine gute Selektivität für Natriumionen aufweisen und die als ionenselektive Komponente zur Bestimmung von Natriumionen in biologischen Materialien einsetzbar sind.

## BESCHREIBUNG DES STANDES DER TECHNIK

Obwohl eine grosse Anzahl an Dicarbonsäurediamiden in der Literatur beschrieben sind, die eine gute Selektivität für Natriumionen gegenüber anderen Alkalimetallionen und Erdalkalimetallionen aufweisen, so sind dennoch ionenempfindliche Membranen, welche diese Dicarbonsäurediamide als ionen selektive Komponente enthalten, oft nicht ausreichend selektiv um eine Bestimmung der Natriumionen in biologischen Materialien zu erreichen oder entsprechende Membranen haben dann, wenn sie mit biologischem Material in Berührung kommen, eine zu geringe Lebensdauer.

Das Dicarbonsäurediamid der folgenden Formel A

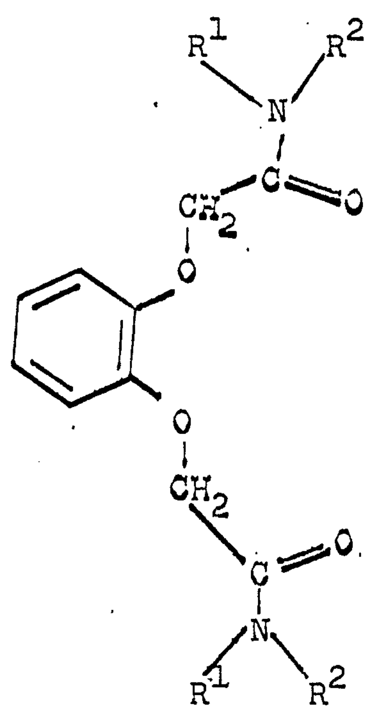

A

in welchem

die beiden Reste $R^1$ Phenylgruppen sind und die beiden Reste $R^2$ Benzylgruppen sind,

wurde bereits als natriumselektive Komponente von natriumselektiven Teilen entsprechender Geräte für klinische Analysen eingesetzt. In diesem Anwendungsbereich stört jedoch die zu geringe Lebensdauer der natriumselektiven Teile. Ferner hat die Verbindung der Formel A einen Selektivitätsfaktor für Natriumionen zu Kalium ionen, also einen Wert von

$$\log K^{Pot}_{NaK}$$

von nur 0,4. Eine Bestimmung der Natriumkonzentration ist daher nur möglich, wenn in den entsprechenden Proben sehr viel geringere Konzentrationen an Kaliumionen als Natriumionen vorhanden sind.

Ziel der vorliegenden Erfindung war es, neue Dicarbonsäurediamide zu entwickeln, die eine gute Selektivität für Natriumionen gegenüber anderen Alkalimetallionen und Erdalkalimetallionen aufweisen und mit deren Hilfe es möglich ist, ionenselektive Teile herzustellen, die eine lange Lebensdauer aufweisen, selbst dann, wenn sie mit Protein enthaltenden biologischen Materialien, wie Blutserum oder Gesamtblut, in Berührung kommen.

Ueberraschenderweise zeigte es sich, dass eine neue Klasse an Dicarbonsäurediamiden, in welchen das Amid-bildende Amin Dicyclohexylamin ist, die gestellten Anforderungen erfüllt.

## BESCHREIBUNG DER ERFINDUNG

Ein Gegenstand der vorliegenden Erfindung sind neue Dicarbonsäurediamide, die dadurch gekennzeichnet sind, dass sie die folgende Formel I

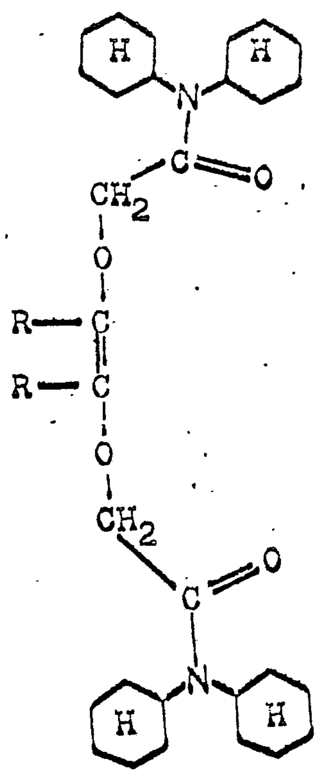

I

aufweisen, in welcher
die Reste R unabhängig voneinander Wasserstoffatome, Alkylgruppen mit 1 - 20 Kohlenstoffatomen, Alkenylgruppen mit 2 - 20 Kohlenstoffatomen oder Alkinylgruppen mit 2 - 20 Kohlenstoffatomen sind oder die beiden Reste R gemeinsam mit den Kohlenstoffatomen, an welche sie gebunden sind, einen cycloaliphatischen oder aromatischen Rest darstellen.

In bevorzugten Gruppen von erfindungsgemässen Dicarbonsäurediamiden der Formel I steht die Gruppe der Formel

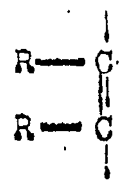

für einen aromatischen Rest der Formel

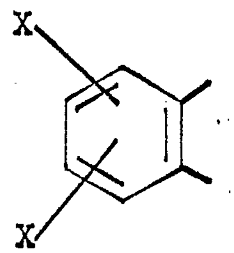

in welchem die beiden Substituenten X unabhängig voneinander für Wasserstoffatome, relativ unpolare Substituenten, wie Alkylgruppen, Alkenylgruppen, Nitrogruppen oder Halogenatome stehen oder die beiden Gruppen X gemeinsam mit den Kohlenstoffatomen, an welche sie gebunden sind, einen ankondensierten, aromatischen oder heteroaromatischen Kern darstellen.

Ein Beispiel für eine solche bevorzugte erfindungsgemässe Verbindung der Formel I ist das N,N,N'N'-Tetracyclohexyl-1,2-phenylen-dioxydiacetamid, welches die folgende Struktur Ia

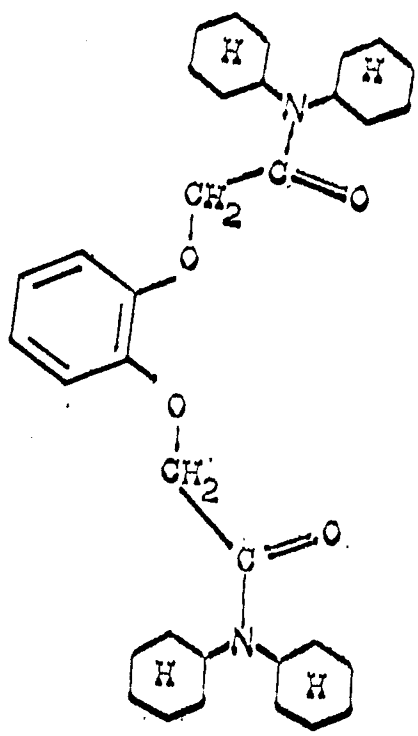

Ia

aufweist.

In diesem neuen Dicarbonsäurediamid der Formel Ia ist der Dicarbonsäureanteil identisch mit der Dicarbonsäure des in der Literatur beschriebenen Dicarbonsäurediamides der weiter vorne angegebenen Formel A, und die beiden Verbindungen unterscheiden sich voneinander nur in dem Amin, welches das Säureamid bildet.

Ueberraschenderweise hatte jedoch die erfindungsgemässe Verbindung der Formel Ia eine wesentlich höhere Selektivität für Natriumionen gegenüber Kaliumionen als die bekannte Verbindung der Formel A. Während der entsprechende Wert von

$$\log K^{Pot}_{NaK}$$

für die erfindungsgemässe Verbindung der Formel Ia -1,5 beträgt, liegt dieser Wert für die bekannte Verbindung der Formel A, wie bereits erwähnt wurde, bei nur -0,4. Für die Bestimmung von Natrium in unverdünnten Blutproben ist jedoch ein Wert von mindestens 0,6 erforderlich, sodass diese Anforderung von der erfindungsgemässen Verbindung der Formel Ia weit übertroffen wird, von der bekannten Verbindung der Formel A jedoch nicht erfüllt wird.

Es sei in diesem Zusammenhang auch auf die Veröffentlichung von U. Oesch, P. Anker, D. Ammann, W. Simon, in: Ion-Selective Electrodes (E. Pungor, I. Buzás, ed.), Akadémiai Kiadó, Budapest, 1985, Seiten 81 und ff. und die Veröffentlichung von U. Oesch, D. Ammann, W. Simon, in Clin. Chem. 1986, 32, Seiten 1448 und ff. verwiesen.

Ionenselektive Membranen enthalten im allgemeinen die ionenselektive Komponente eingebettet in einer Polymermatrix, beispielsweise aus einem Poly(vinylchlorid)-homopolymerisat oder -copolymerisat, und vorzugsweise enthalten sie ferner einen relativ wenig polaren Weichmacher, beispielsweise einen Ester-Weichmacher. Die Lebensdauer derartiger ionenselektiver Membranen wird dadurch eingeschränkt, dass allmählich von den Probelösungen, in denen die entsprechenden Ionenkonzentrationen bestimmt werden, die ionenselektive Komponente und auch der Weichmacher aus den Membranen extrahiert werden. Das Problem bezüglich der verkürzten Lebensdauer ist dort besonders schwerwiegend, wo Ionenkonzentrationen in proteinhaltigen Proben und biologischem Material, wie Serumproben und Gesamtblut bestimmt werden sollen.

Es wurde versucht, dieses Problem durch Verwendung von Komponenten mit hohen lipophilen Eigenschaften, also einem hohen Wert von

$\log P_{TLC}$

zu lösen. Während dieser Wert für die erfindungsgemässe Verbindung der Formel Ia 8,3 beträgt, liegt er für die bekannte Verbindung der Formel A bei nur 4,6.

Ein weiterer Gegenstand der vorliegenden Erfindung sind die neuen Natriumkomplexe der Dicarbonsäurediamide der Formel I und die entsprechenden Natriumkomplexe der bevorzugten weiter vorne genannten erfindungsgemässen Dicarbonsäurediamide.

Des weiteren betrifft die vorliegende Erfindung ein Verfahren zur Herstellung der erfindungsgemässen Dicarbonsäurediamide der Formel I

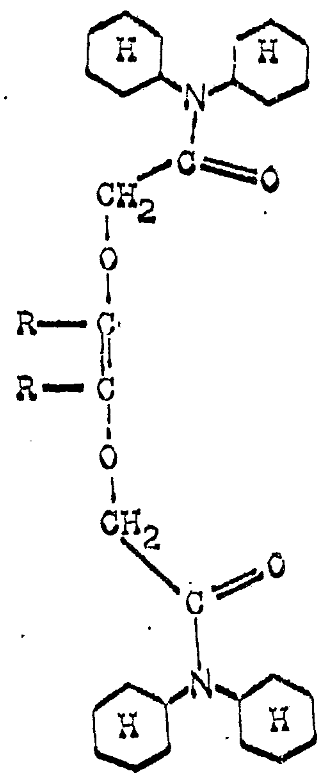

I

in der die Reste R die weiter vorne angegebene Bedeutung besitzen. Das erfindungsgemässe Verfahren zur Herstellung dieser Verbindungen der Formel I ist dadurch gekennzeichnet, dass man entweder eine Dicarbonsäure der Formel II

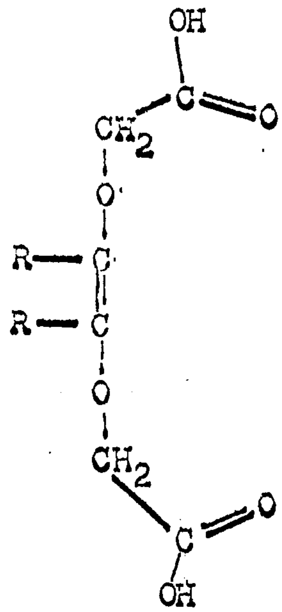

II

oder ein reaktives Derivat der Dicarbonsäure der Formel II, wobei in Formel II die Reste R die gleiche Bedeutung aufweisen, wie in Formel I,
mit dem Dicyclohexylamin der Formel III

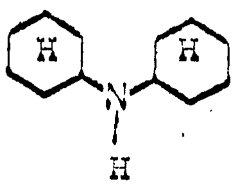

III

zu dem Dicarbonsäurediamid der Formel I umsetzt, oder dass man ein Diol der Formel IV

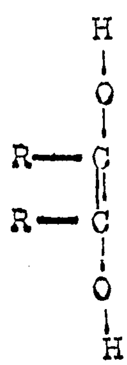

IV

in welcher die Reste R die gleiche Bedeutung aufweisen, wie in Formel I, entweder mit einem Säureamid der Formel V

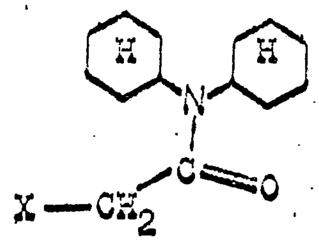

V

worin X eine abspaltbare Gruppierung darstellt, zu dem Dicarbonsäurediamid der Formel I veräthert oder dass man das Diol der Formel V mit einem Ester der Formel VI

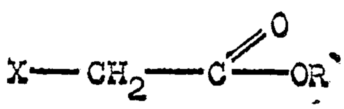

VI

in welchem X eine abspaltbare Gruppierung darstellt und R ein aliphatischer, cycloaliphatischer, aromatischer oder heterocyclischer Rest ist, veräthert, wobei sich ein Dicarbonsäurediester der Formel VII

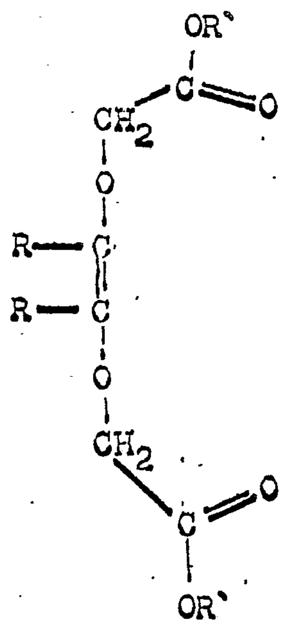

VII

bildet und diesen Ester direkt oder nach seiner Verseifung und Ueberführung in ein aktives Dicarbonsäurederivat durch Umsetzung mit dem Dicyclohexylamin der Formel III in das Dicarbonsäurediamid der Formel I überführt.

Bei diesem Herstellungsverfahren können als reaktive Derivate der Dicarbonsäuren der Formel II beispielsweise die entsprechenden Dicarbonsäurehalogenide, vorzugsweise Dicarbonsäuredichloride, eingesetzt werden oder auch die entsprechenden Dicarbonsäureanhydride.

Falls der Ester der Formel VII zunächst verseift und dann in ein entsprechendes aktives Dicarbonsäurederivat überführt wird, dann sind entsprechende geeignete aktive Dicarbonsäurederivate die oben genannten, wie zum Beispiel die entsprechenden Halogenide.

Die abspaltbare Gruppe X des entspre chenden Essigsäureamides der Formel V und auch die abspaltbare Gruppe X des entsprechenden Essigsäureesters der Formel VI kann ein Halogenatom sein, beispielsweise ein Chloratom oder auch eine Azogruppe, beispielsweise ein entsprechender Diazoessigsäureester oder ein Diazoessigsäureamid.

Ein weiterer Gegenstand der vorliegenden Erfindung sind ionenselektive Teile zur Bestimmung der Konzentration von Natriumionen, die dadurch gekennzeichnet sind, dass sie als ionenselektive Komponente ein Dicarbonsäurediamid der Formel I enthalten.

Ein Beispiel für entsprechende ionenselektive Teile sind ionenselektive Membranen von Elektroden zur Bestimmung der Aktivität von Natriumionen.

Ein weiteres Beispiel sind natriumempfindliche Miniaturelektroden in Form eines auf das Gate eines Feldeffekttransistors aufgebrachten Oberflächenbereiches, der die für Natriumionen empfindliche Komponente enthält. Ein weiteres Einsatzgebiet sind sogenannte "Coated Wire Elektroden", in welchen sich die natriumselektive Komponente direkt auf einem elektrischen Leiter befindet, beispielsweise einem mit Silberchlorid beschichteten Silberdraht.

In den ionenempfindlichen Membranen der ionenempfindlichen Elektroden und auch in den oben erwähnten miniaturisierten Vorrichtungen zur Bestimmung von Ionenkonzentrationen wird die ionenselektive Komponente im allgemeinen eingebettet in einer Polymermatrix verwendet. Allenfalls enthält die Poly matrix zusätzlich zu der ionenselektiven Komponente auch noch einen lipophilen Weichmacher.

Bevorzugte ionenselektive Teile zur Bestimmung der Konzentration von Natriumionen sind entsprechende ionenselektive Membranen, einschliesslich der genannten miniaturisierten Vorrichtungen, die eine Verbindung der Formel I als ionenselektive Komponente, eingebettet in einer Polymermatrix, enthalten, vorzugsweise in einer Matrix aus einem Poly(vinylchlorid)-homopolymerisat oder -copolymerisat. Im allgemeinen enthalten derartige ionenselektive Membranen zusätzlich noch einen Weichmacher, vorzugsweise einen lipophilen Weichmacher. Bevorzugte derartige Weichmacher sind Dicarbonsäurediester und Tetracarbonsäuretetraester wie zum Beispiel Bis(1-butylpentyl)-adipat.

Gemäss einer weiteren Ausführungsart der Erfindung ist der ionenselektive Teil eine entsprechenden Testvorrichtung zur Testung von Natriumionen in flüssigen Medien. In derartigen Testvorrichtungen, beispielsweise Teststreifen, liegt die für Natriumionen selektive Komponente der Formel I im allgemeinen eingebettet in ein Trägermaterial vor, beispielsweise einer Polymermatrix. Wenn die erfindungsgemässen natriumselektiven Komponenten der Formel I mit Natriumionen einen Komplex bilden, dann entstehen bei dieser Komplexbildungsreaktion $H_3O^+$ Ionen, d.h. der pH-Wert verschiebt sich in stärker saure Bereiche.

Gemäss einer bevorzugten Ausführungsart der oben beschriebenen Testvorrichtungen zur qualitativen oder quantitativen Bestimmung von Natrium ionen in Proben, enthalten diese, eingebettet in das inerte Trägermaterial, zusätzlich zu der natriumselektiven Komponente der Formel I, noch einen Indikator, der die Aenderung des pH-Wertes anzeigt. Beispielsweise kann dieser pH-Indikator ein solcher sein, der die Aenderung des pH-Wertes durch einen Farbumschlag anzeigt.

Wenn mit entsprechenden Teststreifen in einer Probelösung die Natriumkonzentration bestimmt wird, dann ist dieser Wert aus der Stärke des Farbumschlages des entpsrechenden pH-Indikators ersichtlich.

Die Erfindung sei nun anhand von Beispielen näher erläutert.

Beispiel 1

Herstellung von N,N,N',N'-Tetracyclohexyl-1,2-phenylen-dioxydiacetamid

Die im Titel genannte Verbindung ist die Verbindung der weiter vorne angegebenen Formel Ia.

Stufe A

Herstellung von 1,2-Phenylendioxy-diacetyldichloride

Die bei diesem Herstellungsverfahren als Ausgangsmaterial benötigte 1,2-Phenylendioxy-diessigsäure wurde aus Catechin nach dem Verfahren hergestellt, das von D. Ammann, R. Bissig, M. Güggi, E. Pretsch, W. Simon, I.J. Borowitz und L. Weiss in Helv. Chim. Acta 1975, 58, Seiten 1535 und ff. beschrieben ist. Eine Mischung aus 10 g (44,2 mmol) der 1,2-Phenylendioxy-diessigsäure und 6,4 ml (88,4 mmol) an Thionylchlorid wurden in 150 ml an Toluol gelöst und man kochte zwei Stunden lang unter Rückfluss.

Nach dem Abdampfen der Lösungsmittel unter Vakuum erhielt man 11,0 g (41,8 mmol) des im Titel genannten Dicarbonsäuredichlorides. Die Ausbeute entsprach 94 % der theoretischen Ausbeute. Das flüssige Produkte zeigte im Infrarotspektrum Absorption bei 1800 $cm^{-1}$.

Stufe B

Herstellung des N,N,N',N'-Tetracyclohexyl-1,2-phenylen-dioxydiacetamides

17 g (93,7 mmol) an Dicyclohexylamin und 9,3 g (92 mmol) an wasserfreiem Triäthylamin wurden in 100 ml Methylenchlorid gelöst.

Die in Stufe 1 erhaltenen 11 g (41,8 mmol) des Dicarbonsäuredichlorides wurden in 50 ml Methylenchlorid gelöst. Diese Lösung wurde tropfenweise zu der Lösung der Amine im Methylenchlorid zugesetzt und anschliessend rührte man die Rekationsmischung 20 Stunden lang bei Zimmertemperatur.

Die Methylenchlorid-phase wurde viermal mit Wasser ausgeschüttelt, anschliessend über Magnesiumsulfat getrocknet und dann das Lösungs mittel abgedampft. Man erhielt 21,8 g (39,4 mmol) des entsprechenden Rohproduktes. Die Ausbeute an diesem Rohprodukt entspricht 93,4 % der theoretischen Ausbeute.

Das Rohprodukte wurde dreimal aus Essigsäureäthylester umkristallisiert und man erhielt so 4.2 g (7,6 mmol) an dem gereinigten Dicarbonsäurediamid.

Das Infrarotspektrum, aufgenommen in Chloroform, zeigte eine Absorption bei 1635 $cm^{-1}$.

Das kernmagnetische Resonanzspektrum $^1H$-NMR (300 MHz, $CDCl_3$) ergab 1,05-1,76 (br, 36 H, 18 $CH_2$ des Cyclohexyls); 2,40-2,48 (br, 4 H, 2 $CH_2$ des Cyclohexyls); 2,91-2,93 (br, 2 H, 2 CH des Cyclohexyls); 3,55-3.63 (br, 2 H, 2 CH des Cyclohexyls); 4,63 (s, 4 H, 2 $OCH_2CO$); 6,87-6,94 (br, 4 H, aromatisch).

Das kernmagnetische Resonanzspektrum $^{13}C$-NMR (85 MHz, $CDCl_3$) ergab:
25,3 , 25,9 , 26,6 , 29,7 , 31,5 (5 t, 20 $CH_2$ des Cyclohexyls); 56,3 , 57,9 (2 d, 4 CH des Cyclohexyls); 69,9 (t, 2 $CH_2$, $OCH_2CO$); 113,7 , 121,7 , (2 d, 4 CH, aromatisch); 147,9 (s, 2C, aromatisch); 167,0 (s, 2 C, Amidcarbonyl).

Das Massenspektrum lieferte: 552 (4 %, $M^+$), 469 (5%, $M^+$-$C_{12}H_{21}$), 344 (46 %, $M^+$-$C_{13}H_{22}NO$), 222 (100%, $C_{14}H_{24}NO$), 180 (63%, $C_{12}H_{22}N$).

Die Elementaranalyse ergab für die Verbindung der Summenformel $C_{34}H_{52}N_2O_4$ folgende Werte:
berechnet: C = 73,87 %
H = 9,48 %
N = 5,07 %.
gefunden: C = 73,89 %
H = 9,53 %
N = 4,86 %.

Beispiel 2

Herstellung einer ionenempfindlichen Membran für eine Natriumelektrode

Die ionenempfindliche Membran wurde unter Verwendung des nach dem Verfahren gemäss Beispiel 1 hergestellten Dicarbonsäurediamides als natriumselektive Komponente und von Poly(vinylchlorid) als Polymermaterial hergestellt. Des weiteren enthielt die Membran den Ester-Weichmacher der folgenden Formel VIII

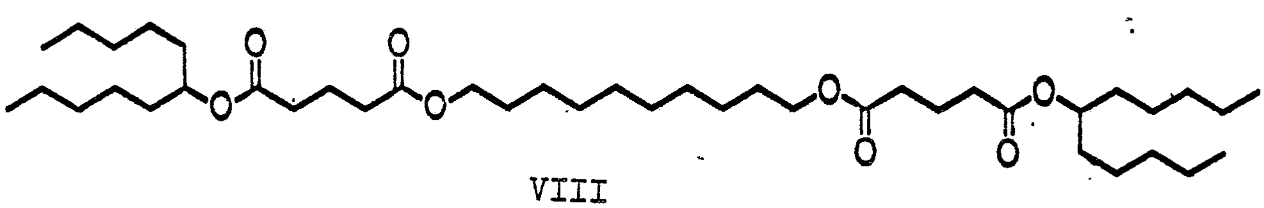

VIII

Ein weiterer verwendeter Weichmacher war das Bis(1-butylpentyl)adipat der Formel

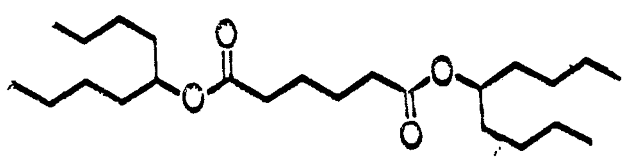

abgekürzt als BBPA.

Die Membran hatte die folgende Zusammensetzung:

| Bestandteil | Menge in Gew.-% |
|---|---|
| Verbindung der Formel Ia | 1 |
| Poly(vinylchlorid) | 33 |
| Weichmacher der Formel VIII | 66 . |

Die Herstellung der Membran erfolgte nach dem Verfahren, das von P. Anker, E. Wieland, D. Ammann, R.E. Dohner R. Asper, W. Simon in Anal. Chem. 1981, 53, Seiten 1970 und ff. beschrieben ist.

Weitere Membranen wurden unter Verwendung von Weichmachern auf Basis von Dicarbonsäurediestern, welche entsprechende Ester der Adipinsäure und Sebacinsäure mit Alkanolen, mit zum Beispiel 8 Kohlenstoffatomen sind, hergestellt.

Die EMK wurde mit einer Zelle folgenden Typs bestimmt:

Hg; $Hg_2Cl_2$, KCl (ges.)|3 M KCl Probelösung| Membran|| $10^{-2}$ M NaCl, AgCl; Ag.

Die entsprechende Messanordnung ist in der Veröffentlichung von U. Wuthier, H.-V. Pham, B. Rusterholz, W. Simon, in Helv. Chim. Acta 1986, 69, Seiten 1435 und ff. beschrieben.

Des weiteren wurde eine ionenselektive Membran zu Vergleichszwecken hergestellt, welche die gleiche Zusammensetzung aufwies, wie die in der obigen Tabelle angeführte erfindungsgemässe Membran. Diese Membran enthielt jedoch als ionenempfindliche Komponente statt der Verbindung der Formel Ia das zum Stande der Technik gehörende Dicarbonsäurediamid der Formel A.

Beispiel 3

In diesem Beispiel wurden elektrische Eigenschaften der erfindungsgemässen Membran getestet, welche die Zusammensetzung aufwies, die in der Tabelle des Beispiels 2 beschrieben ist.

Diese Membran wurde mit einer entsprechenden Membran zu Vergleichszwecken verglichen, welche eine analoge Zusammensetzung aufwies, jedoch als ionenempfindliche Komponente die aus dem Stande der Technik bekannte Verbindung der Formel A enthielt.

Der spezifische Widerstand, angegeben in Ohm mal cm betrug für die erfindungsgemässe Membran 2,0 mal $10^8$ Ω cm und für die Membran zu Vergleichszwecken, 1,3 mal $10^8$ Ω cm. Die Feststellungsgrenze für Natriumionen in Anwesenheit von 5 • $10^{-3}$ Mol an Kaliumchlorid, also der entsprechende Wert für log $a_{Na}$ war für die erfindungsgemässe Membran -3,9 , für die Membran zu Vergleichszwecken hingegen nur -2,8 .

Die erfindungsgemässe Membran hatte bei häufigem Kontakt mit Blutserum eine Lebensdauer von mehreren Monaten, die Membran zu Vergleichszwecken, jedoch nur eine Lebensdauer von wenigen Wochen.

Analoge Ergebnisse wurden mit erfindungsgemässen Membranen, beziehungsweise Membranen zu Vergleichszwecken erhalten, die als Weichmacher Bis(1-butylpentyl)-adipat enthielten.

**Ansprüche**

1. Neue Dicarbonsäurediamide, dadurch gekennzeichnet, dass sie die Formel I

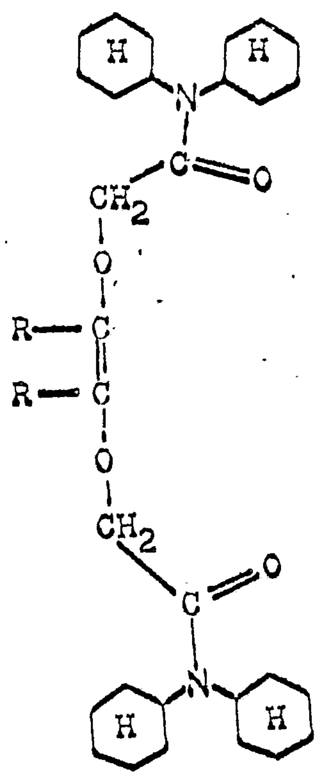

I

aufweisen, in welcher die Reste R unabhängig voneinander Wasserstoffatome, Alkylgruppen mit 1 - 20 Kohlenstoffatomen, Alkenylgruppen mit 2 - 20 Kohlenstoffatomen oder Alkinylgruppen mit 2 - 20 Kohlenstoffatomen sind oder die beiden Reste R gemeinsam mit den Kohlenstoffatomen, an welche sie gebunden sind, einen cycloaliphatischen oder aromatischen Rest darstellen.

2. Dicarbonsäurediamide gemäss Patentanspruch 1, dadurch gekennzeichnet, dass in der Formel I die Gruppe der Formel

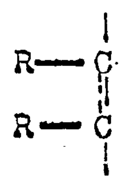

für einen aromatischen Rest der Formel

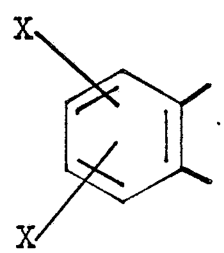

steht, in welcher die beiden Substituenten X unabhängig voneinander für Wasserstoffatome, relativ unpolare Substituenten, wie Alkylgruppen, Alkenylgruppen, Nitrogruppen oder Halogenatome stehen oder die beiden

Gruppen X gemeinsam mit den Kohlenstoffatomen, an welche sie gebunden sind, einen ankondensierten, aromatischen oder heteroaromatischen Kern darstellen.

3. Dicarbonsäurediamid gemäss Anspruch 2, dadurch gekennzeichnet, dass es das N,N,N',N'-Tetracyclohexyl-1,2-phenylen-dioxydiacetamid der Formel Ia

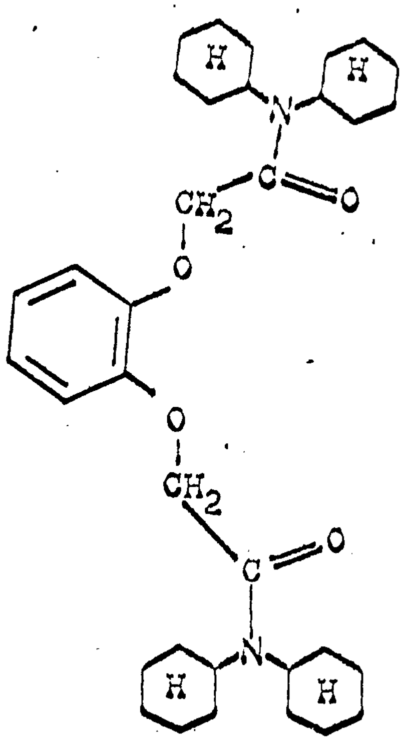

Ia

ist.

4. Natriumkomplexe der Dicarbonsäurediamide der Formel I gemäss Anspruch 1.

5. Natriumkomplexe gemäss Anspruch 4, dadurch gekennzeichnet, dass sie die Natriumkomplexe der Dicarbonsäurediamide gemäss Anspruch 2 oder 3 sind.

6. Verfahren zur Herstellung der Dicarbonsäurediamide der Formel I

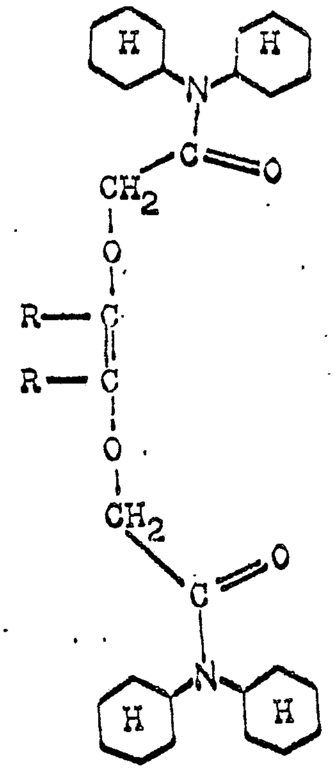

I

gemäss Anspruch 1,
in welchen die Reste R unabhängig voneinander Wasserstoffatome, Alkylgruppen mit 1 - 20 Kohlenstoffatomen, Alkenylgruppen mit 2 - 20 Kohlenstoffatomen oder Alkinylgruppen mit 2 - 20 Kohlenstoffatomen darstellen oder
die beiden Reste R gemeinsam mit dem Kohlenstoffatom, an welches sie gebunden sind, einen cycloaliphatischen oder aromatischen Rest bilden, dadurch gekennzeichnet, dass man
entweder eine Dicarbonsäure der Formel II

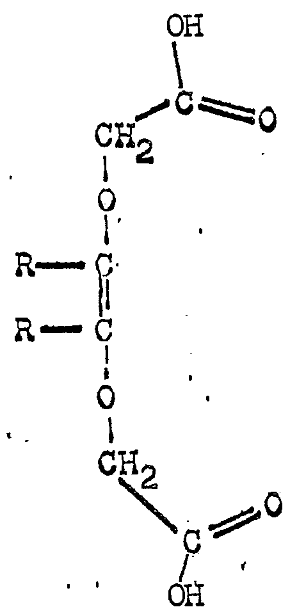

II

oder ein reaktives Derivat der Dicarbonsäure der Formel II, wobei in Formel II die Reste R die gleiche Bedeutung aufweisen, wie in Formel I,
mit dem Dicyclohexylamin der Formel III

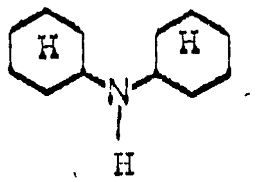

III

zu dem Dicarbonsäurediamid der Formel I umsetzt, oder dass man ein Diol der Formel IV

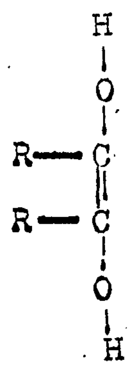

IV

in welcher die Reste R die gleiche Bedeutung aufweisen, wie in Formel I, entweder mit einem Säureamid der Formel V

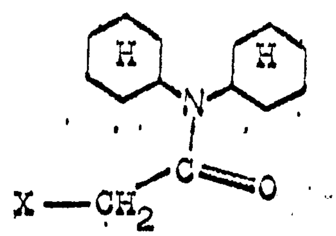

V

worin
X eine abspaltbare Gruppierung darstellt,
zu dem Dicarbonsäurediamide der Formel I veräthert oder dass man das Diol der Formel V mit einem Ester der Formel VI

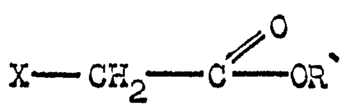

VI

in welchem
X eine abspaltbare Gruppierung darstellt und
R ein aliphatischer, cycloaliphatischer, aromatischer oder heterocyclischer Rest ist,
veräthert, wobei sich ein Dicarbonsäurediester der Formel VII

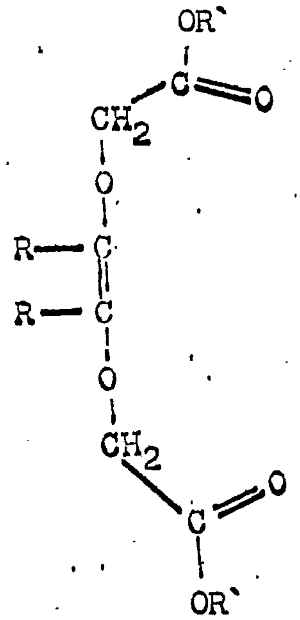

VII

bildet
und diesen Ester direkt oder nach seiner Verseifung und Ueberführung in ein aktives Dicarbonsäurederivat durch Umsetzung mit dem Dicyclohexylamin der Formel III in das Dicarbonsäurediamid der Formel I überführt.

7. Verfahren nach Anspruch 6, dadurch gekennzeichnet, dass man ein Dicarbonsäurediamid gemäss Anspruch 2 oder 3 herstellt.

8. Ionenselektiver Teil zur Bestimmung der Konzentration von Natriumionen, dadurch gekennzeichnet, dass er als ionenselektive Komponente ein Dicarbonsäurediamid der Formel I gemäss Anspruch 1 enthält.

9. Ionenselektiver Teil gemäss Anspruch 8, dadurch gekennzeichnet, dass er als ionenselektive Komponente ein Dicarbonsäurediamid gemäss Anspruch 2 oder 3 enthält.

10. Ionenselektiver Teil gemäss Anspruch 8 oder 9, dadurch gekennzeichnet, dass er eine ionenselektive Membran ist, die ausserdem eine Matrix aus Kunststoff für die ionenselektive Komponente enthält, vorzugsweise eine Matrix aus einem Poly(vinylchlorid)homopolymerisat oder-copolymerisat, und dass diese ionenselektive Membran gegebenenfalls ausserdem einenlipophilen Weichmacher enthält, vorzugsweise einen Esterweichmacher, wie Bis(1-butylpent-yl)-adipat.

11. Ionenselektiver Teil gemäss Anspruch 8 oder 9, dadurch gekennzeichnet, dass er in Form einer Testvorrichtung zur Testung von Natriumionen in flüssigen Medien vorliegt.

12. Ionenselektiver Teil gemäss Anspruch 11, dadurch gekennzeichnet, dass diese Testvorrichtung vorzugsweise ein Teststreifen, eine Polymermatrix aufweist, in welche das Dicarbonsäurediamid der Formel I eingebettet ist.

13. Testvorrichtung nach Anspruch 12, dadurch gekennzeichnet, dass in der Polymermatrix zusätzlich zu der natriumselektiven Komponente der Formel I noch ein Indikator enthalten ist, der eine Aenderung des pH-Wertes anzeigt, beispielsweise eine Aenderung des pH-Wertes durch einen Farbumschlag anzeigt.